# EUROPEAN PATENT SPECIFICATION

(11) **EP 1 601 085 B1**
(45) Date of publication and mention of the grant of the patent: **15.04.2009**
(21) Application number: 05011355.4
(22) Date of filing: 25.05.2005
(51) Int. Cl.: H02K 7/116, H02K 5/00, H02K 5/15, B62M 23/02, B62M 7/12

(54) **Hub unit for use in electrically movable wheels and vehicle comprising the hub unit**
Nabe für elektrisch angetriebene Räder und Fahrzeug mit dieser Nabe
Moyeu pour roues à propulsion électrique et véhicule comprenant ce moyeu

(30) Priority: 27.05.2004 JP 2004156969
(43) Date of publication of application: 30.11.2005
(73) Proprietor: SANYO ELECTRIC CO., LTD., Moriguchi-shi, Osaka 570-8677 (JP)
(72) Inventor: Tanaka, Tatsuaki, Kasai-shi Hyogo (JP); Tomoshige, Kazuhiro, Kasai-shi Hyogo (JP); Adachi, Ryohei, Kanzaki-gun Hyogo (JP)
(74) Representative: TER MEER - STEINMEISTER & PARTNER GbR

(56) References cited:
- DE-A1- 19 805 679
- DE-U1- 20 018 466
- FR-A- 1 517 088
- PATENT ABSTRACTS OF JAPAN vol. 2003, no. 10, 8 October 2003 (2003-10-08) -& JP 2003 164110 A (SANYO ELECTRIC CO LTD), 6 June 2003 (2003-06-06)

## Description

### FIELD OF THE INVENTION

The present invention relates to hub units for use in electrically movable wheels, and to electrically assisted bicycles, wheelchairs and like vehicles comprising the hub unit.

### BACKGROUND OF THE INVENTION

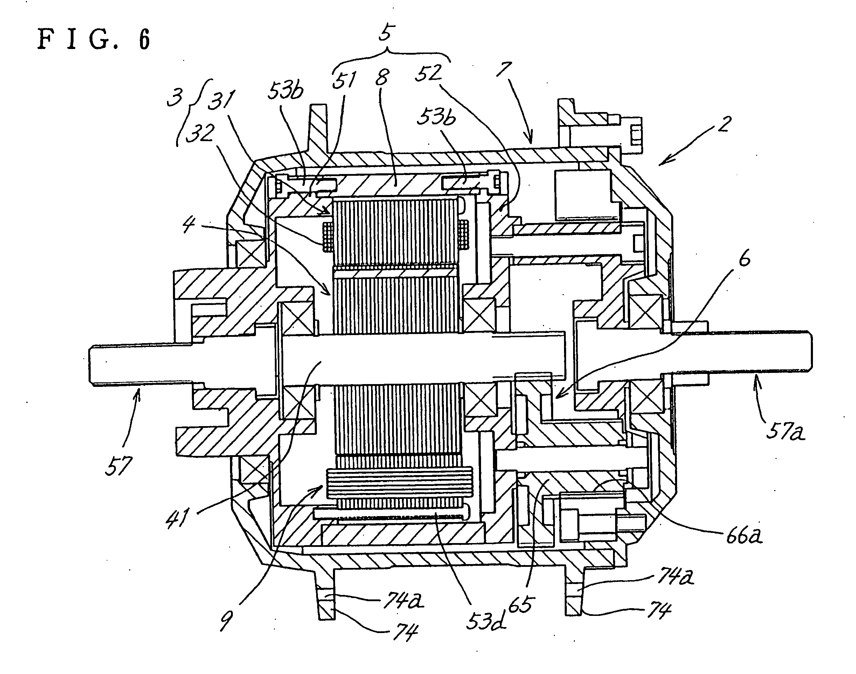

FIG. 6 shows an electrically movable wheel hub unit 2 for an electrically assisted bicycle.

The electrically movable wheel hub unit (hereinafter referred to as the "hub unit") has a motor 9 comprising a stator 3 and a rotor 4, a planetary gear reduction mechanism 6 coupled to a rotor shaft 41 extending through an end plate 52 of a motor housing 5, a hub 7 enclosing the motor 9 and the reduction mechanism 6 therein and having inner teeth 66a in mesh with planetary gears 65, and fixing support shafts 57, 57a in alignment with the rotor shaft 41 and projecting outward respectively from an end plate 51 on one side of the motor housing 5 opposite to the reduction mechanism 6 and from a planetary gear support frame 61, the support shafts 57, 57a extending outward from the hub 7.

The support shafts 57, 57a are fixed to the front fork or rear fork of the bicycle, and the spokes (not shown) of the wheel are fitted into spoke attaching holes 74a in circumferential walls 74, 74 provided around the hub 7.

When windings 32 on the stator 3 are energized, the rotor 4 rotates. The rotation of the rotor 4 is transmitted to the hub 7 upon a speed reduction by the planetary gear reduction mechanism 6 to rotate the wheel of the bicycle.

In the case where a load not smaller than a specified value acts on the pedals of the bicycle when they are stepped on, the windings 32 of the stator 3 are energized, permitting the rider to run with ease even on slopes.

See, for example. JP-A No. 2002-514550.

In the case of the hub unit 2 described above, the two fixing support shafts 57, 57a, which are separate from the rotor shaft 41, are arranged in alignment with the rotator shaft 41, so that the hub unit is complex in construction and requires much labor and time for assembling. Furthermore, the three shafts 41, 57, 57a are likely to be out of alignment owing to errors involved in machining or assembling the components, permitting their axes to deflect relative to one another.

DE 198 05 679 A1 discloses an electrically movable wheel hub unit for an electric bus or a rail vehicle like a tramway that comprises a motor with a stator and a rotor. A planetary gear reduction mechanism is coupled to the rotor. A hub encloses the motor and the reduction mechanism therein and has inner teeth formed on an inner surface thereof and meshing with planetary gears. The hub being rotatably drivable by the rotation of the rotor. A fixing supporting shaft is rotatable relative to the hub, i.e. the hub can rotate relative to the fixing support shaft.

The fixing support shaft is provided singly. Further, the shaft extends through the hub and has opposite ends projecting outward from the hub. The rotor has a tubular rotating shaft that is rotatably fitted around the fixing support shaft and is provided with a sun gear of the planetary gear reduction mechanism.

DE 200 18 466 U1 discloses an electrically movable wheel hub unit for a bicycle that comprises a motor composed of a stator fixed to a housing and a rotor, a planetary gear reduction mechanism coupled to the rotor, a hub enclosing the motor, and the reduction mechanism therein and a fixing support shaft rotatable relative to the hub on an axis of rotation of the hub, the fixing support shaft being provided singly, extending through the hub and having opposite end portions projecting outwardly from the hub to be securable to a fork of a bicycle.

The rotor comprises a first tubular rotating element rotatably supported on the fixing support shaft by means of a corresponding ball bearing. Further, a second tubular sleeve or shaft element is slidingly supported by the fixing support shaft and coupled to a sun gear of the planetary gear reduction mechanism.

FR 1 517 088 is concerned with the improved cooling characteristics of an electrical engine or motor used for circulation and acceleration pumps in a central heating system. A rotor is mounted on a driving shaft that is rotatably supported in a housing. The stator is formed from a plurality of metal circular plates, the inner circumferential edge is adapted to accommodate exciting windings whereas the outer periphery of the plates is substantially of square shape.

JP 2003-164110 A discloses another electrically movable wheel hub unit for a bicycle that includes a motor composed of a stator and a rotor, a planetary gear mechanism coupled to the rotor by means of a rotor shaft, one end of which forms a sun gear of a planetary gear reduction mechanism. A hub enclosing the motor and the reduction mechanism and having inner teeth is rotatably supported by a first and a second fixing support shaft.

### SUMMARY OF THE INVENTION

The object underlying the present invention is to provide another electrically movable wheel hub unit for a vehicle which is more simplified in construction and easy to assemble.

This object is achieved by the hub unit according to the invention as defined in claim 1. Embodiments of the invention are defined in the dependent claims 2-4.

The rotor has a stack of metal circular plates through a center of which a tubular rotating shaft of the rotor is inserted so as to render the tubular rotating shaft rotatable with the stack.

The axis of the rotor will not deflect relative to the fixing support shaft because the rotor shaft is rotatably fitted around the single fixing support shaft having both ends projecting outward from the hub as described above.

### BRIEF DESCRIPTION OF THE DRAWINGS

FIG. 1 is a front view of an electrically assisted bicycle;
FIG. 2 is a sectional view of a hub unit;

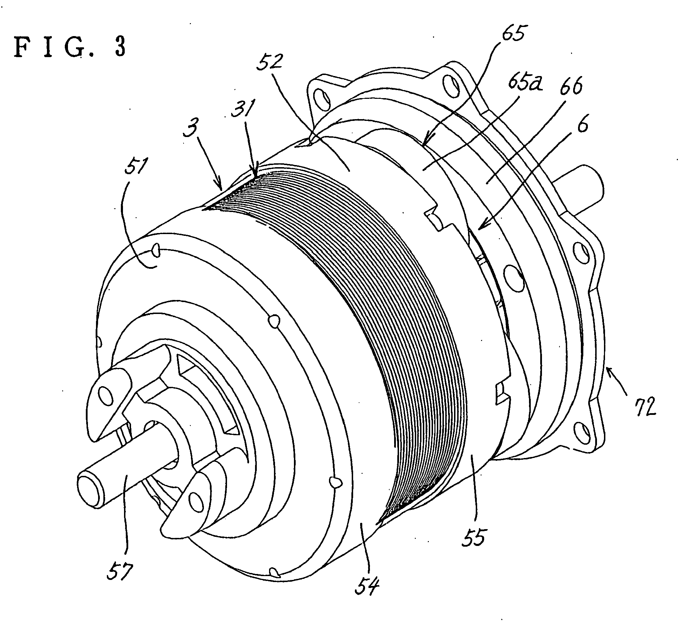

FIG. 3 is a perspective view of the hub unit with a hub main body removed;
FIG. 4 is a perspective view of the hub unit;
FIG. 5 is an exploded perspective view of a stack of metal plates;
FIG. 6 is a sectional view of a conventional hub unit; and

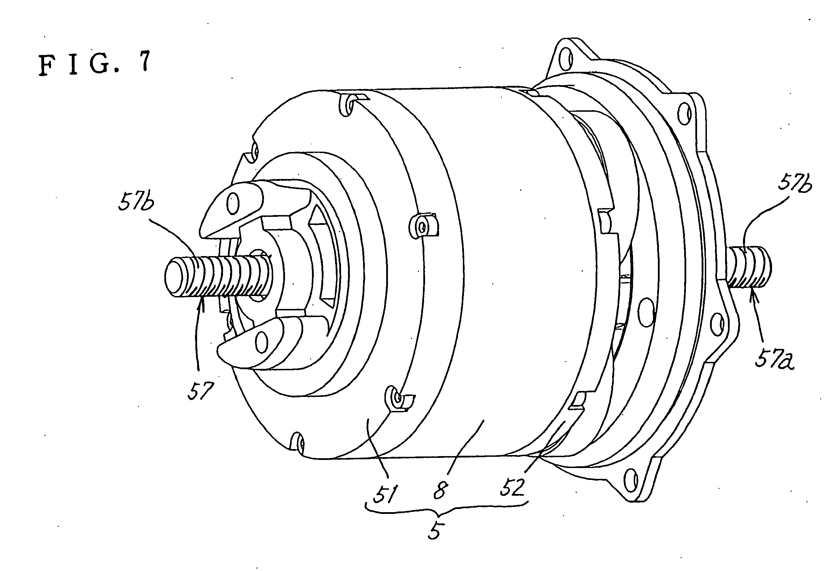

FIG. 7 is a perspective view of the hub unit with a hub main body removed.

### DESCRIPTION OF THE PREFERRED EMBODIMENTS

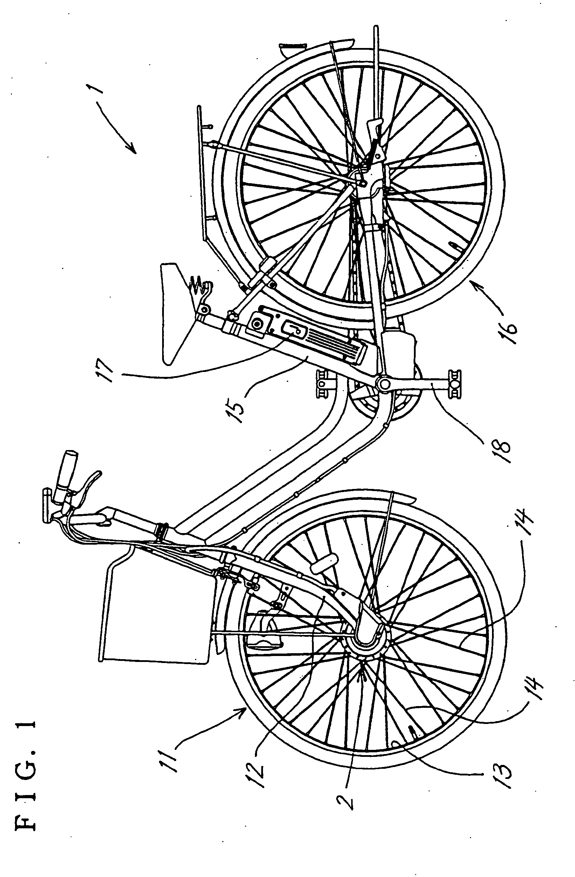

FIG. 1 shows an example of electrically assisted bicycle 1 having a hub unit 2 of the present invention.

A hub unit 2 is attached to the lower end of a front fork 12 of the bicycle 1, and the hub unit 2 and the rim 13 of a front wheel 11 are interconnected by spokes 14, 14.

A battery 17 is mounted on the bicycle between a seat post 15 and a rear wheel 16.

A sensor (not shown) is provided on a suitable portion on which the pedaling force of the pedals 18 acts for energizing a motor 9 of the hub unit 2 by the battery 17 when the load on the pedals is not smaller than a predetermined value.

The hub unit 2 has the above-mentioned motor 9 which comprises a stator 3 and a rotor 4, a hub 7 enclosing the motor 9 therein and rotatingly driven by the rotation of the rotor 4, and a fixing support shaft 57 secured to a motor housing 5, projecting therefrom in alignment with the axis of rotation of the hub 7 and having opposite ends extending outward from the hub 7.

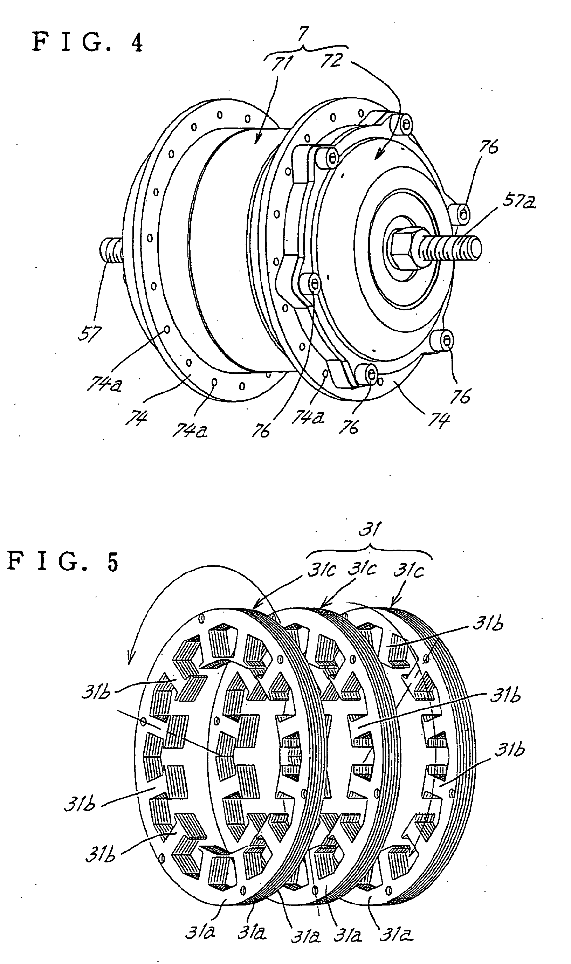

As shown in FIG. 5, the stator 3 comprises a stack 31 of a specified number of metal plates 31a blanked out and windings 32 provided around the metal plate stack 31. Each of the metal plates 31a is in the form of a ring having a plurality of T-shaped projections 31b arranged on the inner periphery of the ring at equal intervals circumferentially thereof and projecting toward the center of the ring. The metal plate 31a has twelve projections 31b according to the present embodiment.

The winding 32 is provided on a stack of projections 31b in phase as a unit.

Such a metal plate stack 31 is made conventionally by blanking out metal plates 31a from a metal sheet material with a blanking die and stacking the plates as blanked out at the same time.

For this reason, burrs created on respective adjacent pairs of blanked-out metal plates 31a, 31a are located at the same position or in alignment. If burrs are formed on each single blanked-out metal plate 31a uniformly circumferentially thereof, the metal plate stack 31 will have a uniform thickness circumferentially thereof.

However, this is almost unlikely in actuality; when a single blanked-out metal plate 31a is observed, burrs are not positioned uniformly with respect to the circumferential direction. When metal plates 31a which are blanked out in succession are merely stacked in superposed layers, the single metal plate stack 31 will have a difference of about 0.1 to 0.3 mm in thickness and has a portion of large thickness and a portion of small thickness.

For the reason to be given later, there is a need to reduce the likelihood that the metal plate stack 31 will have a portion of large thickness and a portion of small thickness. Accordingly, the stack 31 is divided into units 31c each comprising a number of blanked-out metal plates 31a, and the units 31c are stacked as displaced from one another through a predetermined angle.

According to the present embodiment, the units 31c are stacked as displaced from one another through an angle obtained by dividing 360 deg by the number of units 31c to make the metal plate stack 31. For example, in the case where the number of units 31c is three, the three units 31c are displaced from one another by 120 deg, and a wire is wound around each of the projection stacks 31b to form the winding 32.

The metal plate stack 31 can be made easily by blanking out metal plates 31a from a metal sheet material, stacking a specified number of blanked-out metal plates 31a upon blanking, rotating the metal sheet material through a predetermined angle, e.g., through 120 deg according to the present embodiment, within a horizontal plane every time the specified number of metal plates are blanked out.

Incidentally, the number of inward projections 31b on the metal plate 31b blanked out is limited to a number which can be divided by the number of units 31c.

The rotor 4 is rotatably disposed inside the stator 3 concentrically therewith.

The rotor 4 is made by inserting a tubular rotating shaft 44 through the center of a stack 42 of circular metal plates so as to render the shaft 44 rotatable with the metal plate stack 42.

A plurality of permanent magnets 43 are embedded in the outer peripheral portion of the metal plate stack 42 in parallel to the rotating shaft 44 at equal intervals with S poles and N poles arranged alternately circumferentially of the stack.

The housing 5 for the motor 9 is made by holding the metal plate stack 31 of the stator 3 between a pair of first and second end plates 51, 52 opposed to each other axially of the stator 3 and fastening the two end plates 51, 52 together with a plurality of bolts 53 inserted through the outer peripheral portion of the stack 31 and tightened up.

The metal plate stack 31 of the stator 3 serves the function of fixedly positioning the first end plate 51 and the second end plate 52 as spaced apart by a given distance. Thus, the metal plate stack 31 serves also the function of a cylindrical wall 8 of the motor housing 5 in the conventional hub unit shown in FIG. 6.

The first end plate 51 and the second end plate 52 are provided at their outer peripheral edges with short inward cylinder portions 54, 55, respectively. The short cylinder portions 54, 55 have at their inner ends respective stepped portions 54a, 55a having fitted therein opposite-end outer peripheral edges of the metal plate stack 31.

The rotating shaft 44 of the rotor 4 is tubular. The tubular rotating shaft 44 extends through the second end plate 52 to project outward beyond the second end plate 52. A bearing 49 is provided between the shaft 44 and the second end plate 52.

The first end plate 51 has a boss 56 projecting outward from its center.

The fixing support shaft 57 extends through and is secured to the first end plate 51 in alignment with the axis of the stator 3.

The support shaft 57 extends through the boss 56 of the first end plate 51, the tubular rotating shaft 44 of the rotor 4, the planetary gear reduction mechanism 6 to be described later and a closure plate 72 of the hub 7, and has opposite ends projecting outward from the hub 7. The opposite ends of the support shaft 57 are externally threaded as at 57b for use in mounting the hub unit on the front fork 12 of the bicycle 1.

Bearings 46, 46 are provided between the tubular rotating shaft 44 of the rotor 4 and the fixing support shaft 57.

The reduction mechanism is provided externally of the second end plate 52 for transmitting the rotation of the tubular rotating shaft 44 of the rotor 4 upon a speed reduction.

The reduction mechanism of the present embodiment is a planetary gear reduction mechanism 6.

The reduction mechanism 6 has a planetary gear support frame 61 provided with three tubular legs 62 projecting toward and bearing against the second end plate 52 and equidistantly spaced circumferentially of the frame. The frame 61 is fastened to the second end plate 52 with bolts 63 extending through the respective legs 62.

Extending between and supported by the second end plate 52 and the planetary gear support frame 61 are three support shafts 64 equidistantly spaced circumferentially of the second end plate 52 and each adapted to rotatably support a planetary gear 65 thereon.

The planetary gear 65 comprises a large gear 65a positioned closer to the second end plate 52 and a small gear 65b positioned on the opposite side and coaxial with the gear 65a.

The large gear 65a of the planetary gear 65 is in mesh with a sun gear 60 formed on an end portion of the tubular rotating shaft 44 of the rotor 4. The small gear 65b of the planetary gear 65 is in mesh with inner teeth 66a on the closure plate 72 of the hub 7 to be described later.

The hub 7 comprises a hub main body 71 generally in the form of a cup which is open at the center of its bottom wall and open over the entire area of the other side, and the above-mentioned closure plate 72 covering the entire opening.

The hub main body 71 covers the motor housing 5 and the planetary gear reduction mechanism 6. A bearing 73 is provided in the bottom opening 70 around the boss 56 on the first end plate 51 of the motor housing 5.

The closure plate 72 covers the entire opening of the hub main body 71 so as to conceal the support frame 61 of the reduction mechanism 6 and is fastened to the hub main body 71 with bolts 76.

Fastened with screws to the inner side of the closure plate 72 is an annular member 66 concentric with the fixing support shaft 57. The inner teeth 66a meshable with the planetary gears 65 are formed on the inner periphery of the annular member 66.

A bearing 75 is provided in the closure plate 72 around the fixing support shaft 57.

The hub main body 71 has a circumferential wall 74 formed on its outer peripheral surface and extending therearound at each of opposite side portions. Spoke attaching holes 74a are formed in the circumferential wall 74 and arranged at regular intervals circumferentially of the wall.

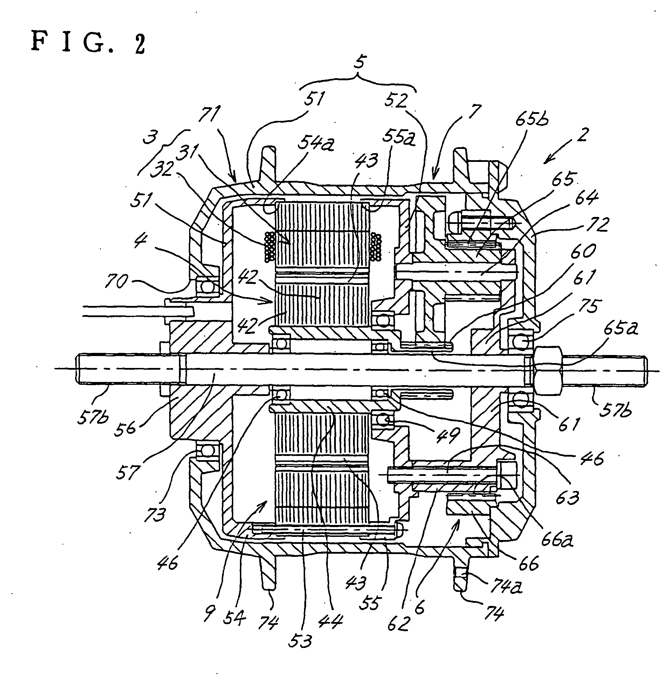

When the fixing support shaft 57 is secured to the front fork 12 of the bicycle by screw-thread engagement, the portions marked with lines slanting leftwardly downward in FIG. 2 are fixed portions, and the portions marked with lines slanting rightwardly downward are rotating portions.

When a load in excess of a specified value acts on the bicycle pedals 18 upon the pedals being stepped on, the battery 17 energizes the windings 32 of the stator 3, rotating the rotor 4.

The rotation of the rotor 4 rotates the sun gear 60 on the end of the tubular rotating shaft 44 to rotate the planetary gears 65 in position. The rotation of the planetary gears 65 is transmitted through the inner teeth 66a to the hub 7 on a speed reduction, drivingly rotating the front wheel 11.

By virtue of the rotation of the rotor 4, the bicycle 1 can be run with a reduced stepping force on the pedals 11.

Since the tubular rotating shaft 44 of the rotor 4 is rotatably fitted around the fixing support shaft 57 having opposite ends projecting from the hub 7, the axis of the rotor 4 will not deflect relative to the support shaft 57.

The hub unit is more simplified in construction and easier to assemble than the convention hub unit wherein the rotating shaft of the rotor is provided with two fixing support shafts arranged respectively on opposite sides thereof and separate from the rotating shaft.

The energization of the windings 32 causes the windings 32 to generate heat, which is given to the stator 3. In the case of the present embodiment, however, the motor housing 5 does not have a tubular wall which prevents radiation of heat, so that the heat given to the stator 3 is released directly through opening between the pair of end plates 51, 52 holding the stator 3 therebetween, whereby the windings 32 can be prevented from overheating.

Because the cylindrical wall 8 of the motor housing 5 can be dispensed with, the hub unit can be manufactured at a lower cost and with a weight reduction corresponding to the wall 8.

Furthermore, the stator 3 can be increased in outside diameter by a value corresponding to the cylindrical wall omitted and therefore provides increased torque.

If the metal plate stack 31 of the stator 3 has varying thicknesses circumferentially thereof, the parallelism between the end plates 51, 52 involves errors, which produce a bending force acting on the rotating shaft 44 of the rotor 4 supported by bearings on the opposed end plates 51, 52, giving rise to the problem of causing trouble to the smooth rotation of the rotor 4. For this reason, an inherent problem will arise when the metal plate stack 31 of the stator 3 is held between the pair of end plates 51, 52 and if the end plates 51, 52 are fastened together by tightening up the bolts 53 so as to cause the thrust of screws to act on the stack 31 in the direction of stacking as practiced in the present embodiment.

According to the embodiment, however, a plurality of units 31c each comprising a specified number of metal plates 31a blanked out are stacked as displaced from one another by a predetermined angle so as to render the metal plate stack 31 uniform in thickness circumferentially thereof to the greatest possible extent. Even if the end plates 51, 52 are fastened by tightening up the bolts 53 so as to causes the thrust of screws to act on the metal plate stack 31 in the stacking direction, the first and second end plates 51, 52 can therefore be given parallelism with high accuracy.

Consequently, the rotor 4 can be rotated smoothly by giving improved parallelism to the bearings for supporting the opposite ends of the rotating shaft 44 of the rotor 4.

The hub unit 2 of the present invention, which is useful for electrically assisted bicycles, can be embodied alternatively for hubs for vehicles having wheels, for example, for wheelchairs.

According to the embodiment described, the fixing support shaft 57 extends outward from opposite ends of the hub 7 so as to support the hub unit 2 at its opposite ends.

## Claims

1. An electrically movable wheel hub unit for vehicle comprising:
- a motor (9) composed of a stator (3) and a rotor (4),
- a planetary gear reduction mechanism (6) coupled to the rotor (4),
- a hub (7) enclosing the motor (9) and the reduction mechanism (6) therein and having inner teeth (66a) formed on an inner surface thereof and meshing with planetary gears (65), the hub (7) being rotatingly drivable by the rotation of the rotor (4), and
- a fixing support shaft (57) rotatable relative to the hub (7) on an axis of rotation of the hub (7), the fixing support shaft (57) being provided singly, extending through the hub (7) and having opposite ends projecting outward from the hub (7),
the rotor (4) having a tubular rotating shaft (44) that is rotatably fitted around the fixing support shaft (57) and is provided with a sun gear (60) of the planetary gear reduction mechanism (6),
**characterized in that**
- the opposite ends of the fixing support shaft (57) are each securable to a fork of the vehicle by screw-thread engagement, and
- the rotor (4) has a stack (42) of metal circular plates and a plurality of permanent magnets (43) embedded in the outer peripheral portion of the stack (42) in parallel to the tubular rotating shaft (44) at equal intervals with S poles and N poles arranged alternately circumferentially of the stack (42), and
- the tubular rotating shaft (44) is inserted through a center of the stack (42) so as to render the tubular rotating shaft (44) rotatable with the stack (42) of metal circular plates (31).

2. The electrically movable wheel hub unit according to claim 1 wherein a pair of end plates (51), (52) are opposed to each other with a stack of metal plates (31) of the stator (3) held therebetween and with the fixing support shaft (57) extending therethrough, the pair of end plates (51). (52) being fastened together with bolts to clamp the metal plate stack (31) therebetween, one of the end plates (51) being fixedly mounted on the support shaft (57), the stator (3) having an outer peripheral surface left exposed to face an inner surface of the hub (7) between the end plates (51). (52).

3. The electrically movable wheel hub unit according to claim 2 wherein the metal plate stack (31) comprises units each having a specified number of metal plates (31a) blanked out, and the units are stacked as displaced from one another in the direction of rotation by a predetermined angle.

4. A vehicle comprising a wheel having incorporated therein an electrically movable wheel hub unit (2) according to any one of claims 1 to 3.

## Patentansprüche

1. Elektrisch bewegliche Radnabeneinheit für Fahrzeug, die umfasst:
- einen Motor (9), der aus einem Stator (3) und einem Rotor (4) aufgebaut ist,
- einen Planetengetriebe-Untersetzungsmechanismus (6), der mit dem Rotor (4) gekoppelt ist,
- eine Nabe (7), die den Motor (9) und den Untersetzungsmechanismus (6) umschließt und Innenzähne (66a) besitzt, die an ihrer inneren Oberfläche ausgebildet sind und mit Planetenrädern (65) kämmen, wobei die Nabe (7) durch die Drehung des Rotors (4) rotatorisch antreibbar ist, und
- eine Befestigungsträgerwelle (57), die relativ zu der Nabe (7) auf einer Drehachse der Nabe (7) drehbar ist, wobei die Befestigungs-Trägerwelle (57) einzeln vorgesehen ist, sich durch die Nabe (7) erstreckt und gegenüberliegende Enden besitzt, die aus der Nabe (7) vorstehen,
wobei der Rotor (4) eine rohrförmige Drehwelle (44) besitzt, die um die Befestigungs-Trägerwelle (57) drehbar angebracht ist und mit einem Sonnenrad (60) des Planetengetriebe-Untersetzungsmechanismus (6) versehen ist,
**dadurch gekennzeichnet, dass**
- die gegenüberliegenden Enden der Befestigungs-Trägerwelle (57) jeweils an einer Gabel des Fahrzeugs durch Schraubgewindeeingriff befestigbar sind und
- der Rotor (4) einen Stapel (42) aus kreisförmigen Metallplatten und mehrere Permanentmagneten (43), die im äußeren Umfangsabschnitt des Stapels (42) parallel zu der rohrförmigen Drehwelle (44) in gleichen Intervallen so eingebettet sind, dass S-Pole und N-Pole in Umfangsrichtung des Stapels (42) abwechselnd angeordnet sind, umfasst, und
- die rohrförmige Drehwelle (44) durch ein Zentrum des Stapels (44) eingesetzt ist, um die rohrförmige Drehwelle (44) mit dem Stapel (42) der kreisförmigen Metallplatten (31) drehbar zu machen.

2. Elektrisch bewegliche Radnabeneinheit nach Anspruch 1, wobei ein Paar Stirnplatten (51), (52) einander so gegenüberliegen, dass ein Stapel Metallplatten (31) des Stators (3) zwischen ihnen gehalten wird und die Befestigungs-Trägerwelle (57) durch sie verläuft, wobei die beiden Stirnplatten (51), (52) mittels Bolzen aneinander befestigt sind, um den Metallplattenstapel (31) dazwischen festzuklemmen, wobei eine der Stirnplatten (51) an der Trägerwelle (57) fest angebracht ist und wobei der Stator (3) eine äußere Umfangsoberfläche besitzt, die freigelassen worden ist, damit sie einer inneren Oberfläche der Nabe (7) zwischen den Stirnplatten (51), (52) zugewandt ist.

3. Elektrisch bewegliche Radnabeneinheit nach Anspruch 2, wobei der Metallplattenstapel (31) Einheiten umfasst, wovon jede eine bestimmte Anzahl von Metallplatten (31a), die ausgeschnitten sind, besitzt, wobei die Einheiten so gestapelt sind, dass sie in Drehrichtung um einen vorgegebenen Winkel zueinander versetzt sind.

4. Fahrzeug, das ein Rad aufweist, in das eine elektrisch bewegliche Radnabeneinheit (2) nach einem der Ansprüche 1 bis 3 eingebaut ist.

## Revendications

1. Moyeu de roue à propulsion électrique pour un véhicule, comprenant :
- un moteur (9) composé d'un stator (3) et d'un rotor (4),
- un mécanisme de réduction (6) à engrenages planétaires, couplé au rotor (4),
- un moyeu (7) qui enferme le moteur (9) et le mécanisme de réduction (6) à l'intérieur et qui comporte des dents intérieures (66a) formées sur sa surface intérieure et en engrènement avec des engrenages planétaires (65), le moyeu (7) pouvant être entraîné en rotation par la rotation du rotor (4), et
- un arbre-support de fixation (57) en rotation par rapport au moyeu (7) sur un axe de rotation du moyeu (7), l'arbre-support de fixation (57) étant prévu sous forme unique, s'étendant à travers le moyeu (7) et ayant des extrémités opposées qui se projettent vers l'extérieur depuis le moyeu (7),
le rotor (4) ayant un arbre rotatif tubulaire (44) qui est monté en rotation autour de l'arbre-support de fixation (57) et qui est pourvu d'une roue solaire (60) du mécanisme de réduction à engrenages planétaires (6),
**caractérisé en ce que**
- les extrémités opposées de l'arbre-support de fixation (57) sont capables d'être chacune fixées sur une fourche du véhicule par un engagement vissé, et
- le rotor (4) comprend un empilement (42) de plaques circulaires métalliques et une pluralité d'aimants permanents (43) noyés dans la portion périphérique extérieure de l'empilement (42) parallèlement à l'arbre rotatif tubulaire (44) à intervalles égaux, avec des pôles S et des pôles N agencés en alternance en sens circonférentiel de l'empilement (42), et
- l'arbre rotatif tubulaire (44) est introduit à travers un centre de l'empilement (42) de manière à rendre l'arbre rotatif tubulaire (44) capable de tourner avec l'empilement (42) de plaques circulaires métalliques (31).

2. Moyeu de roue à propulsion électrique selon la revendication 1, dans lequel une paire de plaques terminales (51, 52) sont opposées l'une à l'autre avec un empilement de plaques métalliques (31) du stator (3) tenu entre elles et avec l'arbre-support de fixation (57) s'étendant à travers elles, la paire de plaques terminales (51, 52) étant fixées ensemble avec des boulons pour serrer l'empilement de plaques métalliques (31) entre elles, l'une des plaques terminales (51) étant montée de manière fixe sur l'arbre-support (57), le stator (3) ayant une surface périphérique extérieure exposée en face d'une surface intérieure du moyeu (7) entre les plaques terminales (51, 52).

3. Moyeu de roue à propulsion électrique selon la revendication 2, dans lequel l'empilement de plaques métalliques (31) comprend des unités ayant chacune un nombre spécifié de plaques métalliques (31a) absentes, et les unités sont empilées en déplacement les unes des autres dans la direction de rotation à raison d'un angle prédéterminé.

4. Véhicule comprenant une roue dans laquelle est incorporé un moyeu de roue à propulsion électrique (2) selon l'une quelconque des revendications 1 à 3.
